# EUROPÄISCHE PATENTSCHRIFT

(11) **EP 2 440 736 B1**
(45) Veröffentlichungstag und Bekanntmachung des Hinweises auf die Patenterteilung: **04.10.2017**
(21) Anmeldenummer: 10730030.3
(22) Anmeldetag: 08.06.2010
(51) Int. Cl.: E21B 17/02

(54) **VORRICHTUNG ZUM ERFASSEN DER LÄNGE EINES BOHRGESTÄNGES**
DEVICE FOR DETERMINING THE LENGTH OF A SET OF BORING RODS
DISPOSITIF DE DÉTECTION DE LA LONGUEUR D'UN TRAIN DE TIGES DE FORAGE

(30) Priorität: 08.06.2009 AT 8832009
(43) Veröffentlichungstag der Anmeldung: 18.04.2012
(73) Patentinhaber: think and vision GmbH, 8700 Leoben (AT)
(72) Erfinder: SCHEIBELMASSER, Anton, A-8054 Graz (AT); LINDNER, Werner, A-8605 Kapfenberg (AT); LAMIK, Abdelrhani, A-8700 Leoben (AT); LAMIK-THONHAUSER, Bouchra, A-8792 St. Peter-Freienstein (AT); KARPF, Robert, A-8600 Bruck/Mur (AT)
(74) Vertreter: Beer & Partner Patentanwälte KG
(86) Internationale Anmeldenummer: PCT/AT2010/000200
(87) Internationale Veröffentlichungsnummer: WO 2010/141967

(56) Entgegenhaltungen:
- DE-A1- 2 319 290
- GB-A- 1 530 647
- GB-A- 2 405 479
- GB-A- 2 435 358
- US-A1- 2005 212 530
- US-B1- 7 362 235

## Beschreibung

Die Erfindung betrifft eine Vorrichtung zum Erfassen der Länge eines Bohrgestänges, die eine Mehrzahl von an Kupplungen zusammengesetzten Rohren aufweist.

Eine wesentliche Messgröße im Rahmen von Tiefbohrungen in der Erdöl- bzw. Erdgasindustrie stellt die Tiefe des Bohrlochs dar. Sie ergibt sich aus der aktuellen Position des Bohrblocks und der Summe der Längen der eingebauten Rohre und Gerätschaften.

Derzeit wird die Tiefe halbautomatisch bestimmt. Automatisiert wird die Blockposition erfasst. Manuell hingegen wird jedes in das Bohrgestänge eingebaute Rohr vom Bedienpersonal vermerkt. Dadurch kommt es oft zu Fehlern, indem Rohre nicht oder falsch eingetragen werden.

Das Problem der automatischen Erfassung der Tiefe besteht hauptsächlich darin, die eingebauten Rohre automatisch zu registrieren. Auf Grund der mechanischen/thermischen Beanspruchung der Rohre ist die Verwendung von z.B. RFIDs problematisch. Optische Registriermethoden (z.B. Strichcode) scheiden auf Grund der Verschmutzungen am Rohr aus.

Aus US 2009/0059772 A ist eine Vorrichtung zur Ermittlung der Tiefe von Bohrlöchern bekannt, bei der die Phasendifferenz eines alternierenden Signals zwischen einem kurzen, oberirdischen Signalweg und einem langen Signalweg durch das Bohrgestänge ermittelt wird. Aus dieser Phasendifferenz wird die Länge des Bohrgestänges ermittelt.

Aus GB 2 405 479 A ist eine Vorrichtung mit den Merkmalen des Oberbegriffs des Anspruches 1 bekannt, welche jedoch nicht zum Erfassen der Länge eines Bohrgestänges sondern zum Lokalisieren von Fehlstellen in der elektrischen Leitung dient.

Der Erfindung liegt daher die Aufgabe zu Grunde, eine Vorrichtung zur Verfügung zu stellen, mit der das Erfassen der Länge eines Bohrgestänges auf einfache und zuverlässige Weise möglich ist.

Gelöst wird diese Aufgabe mit einer Vorrichtung mit den Merkmalen des Anspruchs 1.

Bei der erfindungsgemäßen Vorrichtung wird die sogenannte Zeitbereichsreflektometrie verwendet, welche seit langem zum Erfassen der Länge von Kabeln verwendet wird. Dabei werden kurze elektrische Rechteckimpulse an die Leitung angelegt und die Reflexionen am Kabel erfasst. Je nach Abschlusswiderstand (Lehrlauf, Kurzschluss, Anpassung bzw. Fehlanpassung) erfolgen Echos, aus deren zeitlichem Verhalten (Laufzeit) auf die Entfernung zum Kabelende bzw. zu einer Störstelle geschlossen werden kann. Voraussetzung für die genaue Bestimmung des Ortes sind konstante Laufzeiten im Kabel. Diese bedingen konstante Kabeleigenschaften (Dielektrikum). Das Verfahren wird häufig zum Aufsuchen von Leitungsbrüchen bzw. Kabelquetschungen verwendet. Auch in der Erdölindustrie ist es für solche Zwecke bereits im Einsatz.

Die Erfindung basiert auf Rohren, die beispielsweise mit einem mindestens zweipoligen elektrischen Kabel oder alternativ mit einem Koaxialkabel ausgestattet sind.

Eine bevorzugte Ausführungsform der Erfindung ist dadurch gekennzeichnet, dass die Leitung eines Rohres an einer Stoßstelle an der Kupplung mit der Leitung eines anschließenden Rohres galvanisch verbunden ist, und dass der Wellenwiderstand der Stoßstellen an den Wellenwiderstand der Leitung angepasst, vorzugsweise im Wesentlichen gleich, ist. Dadurch, dass der Wellenwiderstand der Leitung in den einzelnen Rohren sowie der Wellenwiderstand der Stoßstellen bekannt bzw. konstant ist, besteht ein konstanter, bekannter Zusammenhang einerseits zwischen der Länge des Bohrgestänges bzw. der Kabellänge und andererseits der Laufzeit der elektrischen Impulse durch das Kabel, aus welcher die Länge des Kabels und in weiterer Folge des Bohrgestänges berechnet werden kann.

Alle Rohre sind bevorzugt mit dem gleichen Kabel (gleicher Wellenwiderstand) ausgestattet. Der geometrische Aufbau der Rohrverbindungen bzw. Kupplungen zwischen den Rohren und der Stoßstellen der elektrischen Leitung an den Kupplungen ist bevorzugt ebenfalls immer der gleiche (gleicher Wellenwiderstand), was die Berechnung der Länge aus der Laufzeit stark vereinfacht.

Da der Abstand vom letzten verkabelten Rohr zum Bohrkopf konstant und ebenfalls bekannt ist, kann daher auf einfache Weise die Länge des Bohrgestänges von der Einspeisestelle der elektrischen Signale bis zur Spitze des Bohrkopfes berechnet werden. Somit kann mit Hilfe der Erfindung über die sich durch hinzugefügte oder entnommene Rohre ändernde Kabellänge die Länge des Bohrstranges bzw. die Tiefe des Bohrkopfes automatisch erfasst werden.

Um eindeutig auf die Gesamtkabellänge schließen zu können, muss am Ende der Leitung eine Reflexionsstelle für die elektrischen Signale beispielsweise in Form einer Fehlanpassung vorhanden sein. Diese liegt im Falle der verkabelten und galvanisch verbundenen Rohre beispielsweise in Form einer am Ende offenen Leitung vor. Die eintreffende Welle wird von diesem offenen Kabelende stark reflektiert und ist am Kabelanfang bzw. der Einspeisestelle des elektrischen Signals eindeutig detektierbar. Mittels der gemessenen Laufzeit kann auf Grund der bekannten Fortpflanzungsgeschwindigkeit im Kabel auf die Position der Reflexionsstelle geschlossen werden.

Da die Fortpflanzungsgeschwindigkeit hauptsächlich vom Kabeldielektrikum abhängt, muss dieses konstant sein (gleiches Kabel, gleiche Qualität). Da das Kabeldielektrikum temperaturabhängig ist, stellt die Temperatur einen wesentlichen Einflussfaktor dar. Durch Einführung eines tiefenabhängigen Korrekturfaktors kann der Temperatureinfluss auf das Dielektrikum bei zunehmender Tiefe kompensiert werden. Dieser Korrekturfaktor kann als konstanter Wert angenommen werden. Er kann aber auch durch Temperaturmessungen im Bohrstrang ermittelt werden. Dies ist kann vorteilhaft sein, da die Temperatur des Kabels nicht nur von der Tiefe (ca. 3°C/100m) und den geologischen Eigenschaften der Formation, sondern hauptsächlich von der Temperatur der Spülung abhängt. Diese ändert sich aber durch die oben beschriebenen Einflussfaktoren bzw. bedingt durch unterschiedliche Durchflussmengen. Am vorteilhaftesten wird die Temperatur durch Messstationen entlang des Kabels gemessen und der Temperaturverlauf in der Tiefenkorrektur berücksichtigt. Im Falle des verkabelten Bohrstrangs ist eine Verteilung von Messsystemen entlang des Bohrstrangs bevorzugt. Diese können zusätzlich zu bohrrelevanten Daten auch die Temperatur des Kabels vermessen. Wesentlich für diese Korrekturmethode ist auch die Kenntnis des Temperaturgangs des Kabeldielektrikums.

Da die Rohre des Bohrgestänges in regelmäßigen Abständen (z.B. 9m oder 15m) galvanisch verbunden sind, entstehen im Bohrgestänge einige hundert Stoßstellen für die Wellenausbreitung. Um eine negative Wirkung dieser Stoßstellen im Wellenwiderstand (z.B. Reflexionen) zu vermeiden, wird die galvanische Verbindung zwischen den Rohren bevorzugt geometrisch und elektrisch so gestaltet, dass kein Stoß im Wellenwiderstand auftritt (Anpassung auf den Wellenwiderstand der Leitung) und somit die Erkennung der Hauptreflexion am Leitungsende nicht behindert oder verändert wird.

Die allenfalls im Bohrgestängestrang vorhandenen elektrischen Verbraucher stellen für dieses Verfahren ebenfalls eine Stoßstelle im Wellenwiderstand dar und können durch elektrische Maßnahmen ebenfalls dem Wellenwiderstand der Leitung angepasst werden. Eine zusätzliche Möglichkeit besteht darin, den Verbraucher an die Spitze des Bohrgestänges zu setzen. In diesem Fall muss elektrisch eine möglichst große Fehlanpassung zum Wellenwiderstand der Leitung hergestellt werden.

Anpassungen des Wellenwiderstandes (Wechselspannungswiderstand) sind leicht möglich, wenn die Versorgungsleitung mit Gleichspannung (z.B. 400V DC) betrieben wird. Beispielsweise stört ein zum Verbraucher parallel geschalteter, geeigneter Kondensator den Betrieb des DC-Verbrauchers nicht, stellt aber für Hochfrequenz einen Kurzschluss dar und realisiert eine extreme Fehlanpassung.

Die Einspeisung der Impulse erfolgt während des Bohrvorgangs mittels Schleifringen in einem sogenannten Swivel, einem drehbar gelagerten Teil am oberen Ende des Bohrstrangs zur Einspeisung von Spülflüssigkeit, aber auch elektrischer Energie und Kommunikation, in den drehenden Bohrstrang. Da während des Gestängeaus- und -einbaus der Swivel prozessbedingt nicht angeschlossen ist, kann die Einspeisung direkt galvanisch durch einen Stecker erfolgen, der am sogenannten Elevator-Link montiert sein kann, einem Teil einer Hebevorrichtung, welche zum Ein- bzw. Ausbau des Bohrstrangs verwendet wird.

Um eventuell laufende HF-Kommunikation mit Geräten im Bohrgestänge oder Bohrkopf nicht zu stören, sollte die Tiefenmessung mit der Datenübertragung bevorzugt synchronisiert werden (z.B. Master/Slave), da eine Isolierung der reflektierten elektrischen Signale sonst schwierig oder unmöglich werden könnte.

Durch die Erfindung kann die manuelle Eingabe der Rohre und deren Länge entfallen, da mittels Laufzeitmessung auf die Tiefe geschlossen werden kann. Handelsübliche Reflektometer können eingesetzt werden und als Messgerät fungieren. Der Messwert muss nur um einen den Offset zum Bohrkopf bzw. um einen Korrekturfaktor (Rohrlänge/Kabellänge) korrigiert werden. Da sich das Kabel mit dem Rohr gleichzeitig dehnt, wird diese Längenänderung in der Laufzeitmessung erkannt.

Bei der Erfindung ist gleichzeitig als Nebeneffekt auch eine Qualitätskontrolle des verkabelten Bohrgestänges gegeben. Defekte Verbindungsstellen bzw. Leitungsunterbrechungen werden optisch am Oszilloskop bei Servicearbeiten oder im Betrieb durch plötzlich falsche Tiefenmesswerte erkannt. Durch die Laufzeit kann auf den Ort des Defekts geschlossen werden.

Ein wesentlicher Aspekt bei der Verwendung von verkabelten, galvanisch verbundenen Bohrgestängen ist die Zuverlässigkeit der Verbindung zwischen den Rohren. Mit Hilfe der Erfindung kann nach der Herstellung der leitenden Verbindung sofort die Qualität der Verbindung kontrolliert werden (z.B. Unterbrechung, Kurzschluss).

Weitere bevorzugte Ausführungsformen der Erfindung sind Gegenstand der übrigen Unteransprüche.

Nachfolgend wird ein bevorzugtes Ausführungsbeispiel der Erfindung mit Bezugnahme auf die angeschlossene Zeichnung näher beschrieben, in der schematisch eine erfindungsgemäße Vorrichtung an einem Bohrgestänge dargestellt ist.

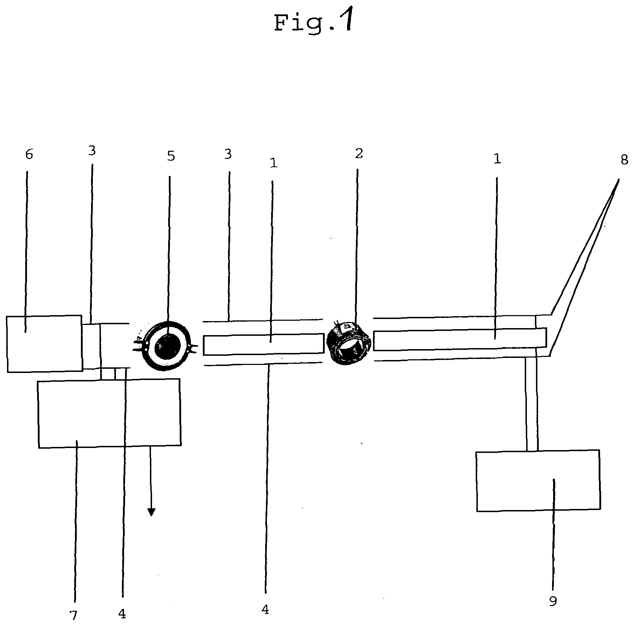

Mit 1 sind in der Zeichnung symbolisch zwei Rohre bezeichnet, welche mit Hilfe einer Kupplung 2 miteinander verbunden sind. Ein Bohrgestänge besteht aus einer Vielzahl solcher mit Hilfe von Kupplungen 2 miteinander verbundenen Rohre 1 sowie einem in den Zeichnungen nicht dargestellten, am in der Zeichnung rechten Ende des letzten Rohres 1 angebrachten Bohrkopf. Mit 3 und 4 sind die Leitungsstränge einer zweipoligen elektrischen Leitung bezeichnet. An einem Ende sind die Leitungsstränge 3, 4 über einen Schleifring 5 an eine Stromversorgung 6 angeschlossen, welche Netz-Wechselspannung auf beispielsweise 400 V Gleichspannung transformiert.

Zwischen der Stromversorgung 6 und dem Schleifring 5 ist eine Einrichtung 7 zum Einspeisen von elektrischen Impulsen in die Leitungsstränge 3 und 4 der elektrischen Leitung angeschlossen, welche die Laufzeit der elektrischen Impulse von der Einrichtung 7 beziehungsweise der Einspeisestelle in die Leitungsstränge 3 und 4 zu einer Reflexionsstelle am anderen Ende 8 der elektrischen Leitung 3, 4 und zurück erfasst.

Am anderen Ende 8 der Leitung, welche in der Zeichnung rechts dargestellt ist, kann ein elektrischer Verbraucher 9 angeschlossen sein, der von der Stromversorgung 6 mit Strom versorgt wird. Wenn der elektrische Verbraucher 9 gleichzeitig die Reflexionsstelle für die von der Einrichtung 7 eingespeisten elektrischen Impulse bilden soll, muss er so ausgeführt sein, dass er eine sogenannte Fehlstelle darstellt, an welcher die Signale reflektiert werden. Alternativ ist es auch möglich, dass der elektrische Verbraucher 9 irgendwo auf dem Weg zwischen der Einspeisestelle und dem Ende 8 der Leitung 3, 4 angeordnet ist, wobei in diesem Fall darauf zu achten ist, dass der Anschluss des elektrischen Verbrauchers 9 keine Fehlstelle darstellt, um die Laufzeitmessung der elektrischen Signale nicht negativ zu beeinflussen. Wenn am Ende 8 der Leitung 3, 4 kein eine Fehlstelle darstellender Verbraucher 9 angeordnet ist, bildet das offene Ende der Leitung 3, 4 die Fehlstelle, an der die Signale reflektiert werden.

Anstelle des in der Zeichnung dargestellten zweipoligen elektrischen Kabels 3, 4 kann zusätzlich oder alternativ beispielsweise ein Koaxialkabel oder eine andere Messleitung verwendet werden, welches ohne Anschluss einer Stromversorgung 6 und eines elektrischen Verbrauchers 9 beispielsweise nur zur Messung der Länge des Bohrgestänges verwendet wird.

Da sich die Laufzeit der elektrischen Signale in der Leitung 3, 4 mit jedem zusätzlichen Rohr 1 und jeder zusätzlichen Kupplung 2 erhöht, kann anhand der Veränderung der Laufzeit eindeutig die Länge des Bohrgestänges, konkret der Leitung 3, 4, gegebenenfalls unter Berücksichtigung zusätzlicher Längen wie der Länge zwischen der Einspeisestelle der elektrischen Signale und dem Schleifring sowie dem Abstand vom Ende 8 der Leitung 3, 4 zum in der Zeichnung nicht dargestellten Bohrkopf errechnet werden.

Um eine optimale Messung zu ermöglichen, sind folgende Maßnahmen empfehlenswert:
- Anpassung der Rohrverbindungen an den Wellenwiderstand der Leitung (reflexionsfreie Verbindung);
- Anpassung von Verbrauchern entlang der Leitung an den Wellenwiderstand (reflexionsfreie Verbindung);
- Erzeugung einer Fehlanpassung am Ende der Messstrecke meistens am Leitungsende (Hauptreflexion);
- Mechanische Verbindung von Kabel und Bohrgestänge und Verkabelung der Rohre mit konstanter Kabellänge;
- Kompensation der Materialeinflüsse auf die Laufzeitmessung. (z.B. Temperaturabhängigkeit der elektrischen Eigenschaften des Kabels (Dielektrikum));
- Synchronisation der Laufzeitmessung mit der HF-Kommunikation auf der Leitung.

Durch die Verwendung von verschiedenen Kabeltypen, Kabelquerschnitten oder diversen elektrischen Verbindern (Schleifringe, Kabeltrommel etc.) kann eine geometrische Anpassung an den Wellenwiderstand fallweise aus konstruktiven Gründen (Platzmangel im mechanischen Verbinder) nicht möglich sein. In diesem Fall kann die Anpassung der Verbinder an die Leitung durch ein elektrisches Netzwerk (T-,H-, Pi-Schaltung) mit diskreten elektrischen Bauteilen (Anpassungsnetzwerk) erzielt werden. Da diese Anpassungsnetzwerke ebenfalls elektrische Energie verbrauchen kann alternativ eine eigene Messleitung verlegt werden, die nicht der Energieversorgung dient.

Die entlang des Bohrstrangs vorhandenen elektrischen Verbraucher stellen für das bei der Erfindung bevorzugt zu Einsatz kommende Messerfahren ebenfalls eine Stoßstelle im Wellenwiderstand dar und werden durch elektrische Maßnahmen dem Wellenwiderstand der Leitung angepasst. Dazu können Transformationsnetzwerke aus diskreten elektrischen Verbrauchern aufgebaut werden, welche die Impedanz des Verbrauchers an den Wellenwiderstand der Leitung anpassen.

## Patentansprüche

1. Vorrichtung zum Erfassen der Länge eines Bohrgestänges, die eine Mehrzahl von an Kupplungen (2) zusammengesetzten Rohren (1), wenigstens eine an den Rohren angeordnete elektrische Leitung (3, 4) und an einem Ende der elektrischen Leitung (3, 4) eine Einrichtung (7) zum Einspeisen von elektrischen Impulsen in die elektrische Leitung (3, 4) aufweist, **dadurch gekennzeichnet, dass** eine Reflexionsstelle am der Einrichtung (7) gegenüber liegenden, anderen Ende (5) der elektrischen Leitung (3, 4) angeordnet ist, dass die elektrische Leitung (3, 4) an den Kupplungen (2) galvanisch verbunden ist und dass die Einrichtung (7) die Laufzeit der elektrischen Impulse von der Einrichtung (7) zu der Reflexionsstelle und zurück erfasst.

2. Vorrichtung nach Anspruch 1, **dadurch gekennzeichnet, dass** die Leitung (3, 4) eines Rohres (1) an einer Stoßstelle an der Kupplung (2) mit der Leitung (3, 4) eines anschließenden Rohres (1) galvanisch verbunden ist, und dass der Wellenwiderstand der Stoßstellen an den Wellenwiderstand der Leitung (3, 4) angepasst, vorzugsweise im Wesentlichen gleich, ist.

3. Vorrichtung nach Anspruch 1 oder 2, **dadurch gekennzeichnet, dass** die Leitung (3, 4) eine Versorgungsleitung für elektrische Verbraucher (9) im Bohrgestänge und/oder in einem Bohrkopf ist.

4. Vorrichtung nach Anspruch 3, **dadurch gekennzeichnet, dass** die Versorgungsleitung (3, 4) mit Gleichspannung von vorzugsweise 400 V betrieben wird.

5. Vorrichtung nach einen Ansprüche 1 bis 4, **dadurch gekennzeichnet, dass** die Reflexionsstelle ein offenes Leitungsende (8) ist.

6. Vorrichtung nach einem Ansprüche 1 bis 4, **dadurch gekennzeichnet, dass** die Reflexionsstelle ein elektrischer Verbraucher (9) ist.

7. Vorrichtung nach einem Ansprüche 1 bis 4, **dadurch gekennzeichnet, dass** ein Kondensator vorzugsweise parallel zu einem Verbraucher (9) geschaltet ist.

8. Vorrichtung nach einem Ansprüche 1 bis 7, **dadurch gekennzeichnet, dass** die elektrischen Impulse Rechteckimpulse sind.

9. Vorrichtung nach einem der Ansprüche 1 bis 8, **dadurch gekennzeichnet, dass** die Einrichtung (7) über einen Schleifring (5) mit dem Ende des Bohrgestänges verbunden ist.

10. Vorrichtung nach einem der Ansprüche 1 bis 9, **gekennzeichnet durch** eine Steuerung, welche eine Datenkommunikation durch die Leitung (3, 4) vom Senden der Impulse und dem Messen der Laufzeit zeitlich trennt.

11. Vorrichtung nach einem der Ansprüche 1 bis 10, **gekennzeichnet durch** Temperaturmessstationen entlang der Leitung (3, 4) und Berücksichtigung des Temperaturverlaufs entlang des Bohrstranges bei einer Tiefenkorrektur.

## Claims

1. Device for detecting the length of a drilling column that has a plurality of pipes (1) assembled on couplings (2), at least one electrical line (3, 4) that is arranged on the pipes, and a unit (7) at one end of the electrical line (3, 4) for feeding electrical impulses into the electrical line (3, 4), **characterized in that** a reflection point is arranged on the other end (5) of the electrical line (3, 4) that is located opposite the unit (7), that the electrical line (3, 4) is galvanically connected on the couplings (2), and that the unit (7) detects the travel time of the electrical impulses from the unit (7) to the reflection point and back.

2. Device according to claim 1, **characterized in that** the line (3, 4) of a pipe (1) is galvanically connected to the line (3, 4) of a following pipe (1) at a coupling joint at the coupling (2), and that the surge impedance of the coupling joints is matched to the surge impedance of the line (3, 4), and is preferably substantially the same.

3. Device according to claim 1 or 2, **characterized in that** the line (3, 4) is a supply line for electrical consumers (9) in the drilling column and/or in a drilling head.

4. Device according to claim 3, **characterized in that** the supply line (3, 4) is operated with direct-current voltage of preferably 400 V.

5. Device according to any one of claims 1 to 4, **characterized in that** the reflection point is an open line end (8).

6. Device according to any one of claims 1 to 4, **characterized in that** the reflection point is an electrical consumer (9).

7. Device according to any one of claims 1 to 4, **characterized in that** a capacitor is connected preferably parallel to a consumer (9) .

8. Device according to any one of claims 1 to 7, **characterized in that** the electrical impulses are rectangular impulses.

9. Device according to any one of claims 1 to 8, **characterized in that** the unit (7) is connected to the end of the drilling column via a slip ring (5) .

10. Device according to any one of claims 1 to 9, **characterized by** a control that temporally separates a data communication through the line (3, 4) from the sending of the impulses and the measuring of the travel time.

11. Device according to any one of claims 1 to 10, **characterized by** temperature measurement stations along the line (3, 4) and by considering the temperature profile along the drill string in a depth correction.

## Revendications

1. Dispositif destiné à détecter la longueur d'une tige de sondage, qui comporte une pluralité de tubes (1) assemblés sur des dispositifs d'accouplements (2), au moins un ligne électrique (3, 4) placée sur les tubes et un système (7) agencé à une extrémité du ligne destiné à alimenter des impulsions électriques dans la ligne électrique (3, 4), **caractérisé en ce qu'**une zone de réflexion est placée sur l'autre extrémité (5) de la ligne électrique (3, 4), qui est opposée au système (7), **en ce que** la ligne électrique (3, 4) est galvaniquement reliée sur les dispositifs d'accouplement (2) et **en ce que** le système (7) détecte le temps de transit des impulsions électriques de l'installation (7) jusqu'à la zone de réflexion et retour.

2. Dispositif selon la revendication 1, **caractérisé en ce que** la ligne (3, 4) d'un tube (1) est galvaniquement reliée sur une jointure sur le système d'accouplement (2) avec la ligne (3, 4) d'un tube (1) adjacent et **en ce que** l'impédance caractéristique des jointures est adaptée, de préférence sensiblement identique, à l'impédance caractéristique de la ligne (3, 4).

3. Dispositif selon la revendication 1 ou 2, **caractérisé en ce que** la ligne (3, 4) est une ligne d'alimentation pour des consommateurs électriques (9) dans la tige de forage et/ou dans une tête de forage.

4. Dispositif selon la revendication 3, **caractérisé en ce que** la ligne d'alimentation (3, 4) est exploitée avec une tension continue de préférence de 400 V.

5. Dispositif selon l'une quelconque des revendications 1 à 4, **caractérisé en ce que** la zone de réflexion est une extrémité de ligne (8) ouverte.

6. Dispositif selon l'une quelconque des revendications 1 à 4, **caractérisé en ce que** la zone de réflexion est un consommateur électrique (9).

7. Dispositif selon l'une quelconque des revendications 1 à 4, **caractérisé en ce qu'**un condensateur est connecté de préférence à la parallèle d'un consommateur (9).

8. Dispositif selon l'une quelconque des revendications 1 à 7, **caractérisé en ce que** les impulsions électriques sont des impulsions rectangulaires.

9. Dispositif selon l'une quelconque des revendications 1 à 8, **caractérisé en ce que** le système (7) est relié avec l'extrémité de la tige de forage par l'intermédiaire d'une bague collectrice (5) .

10. Dispositif selon l'une quelconque des revendications 1 à 9, **caractérisé par** un système de commande, lequel sépare dans le temps une communication de données à travers la ligne (3, 4), de l'émission des impulsions et de la mesure du temps de transit.

11. Dispositif selon l'une quelconque des revendications 1 à 10, **caractérisé par** des postes de mesure de la température le long de la ligne (3, 4) et la prise en compte de la courbe de température le long de la tige de forage lors d'une correction de la profondeur.
